Europäisches Patentamt

European Patent Office

Office européen des brevets

(11) Veröffentlichungsnummer : **0 346 635 B1**

# (12) EUROPÄISCHE PATENTSCHRIFT

(45) Veröffentlichungstag der Patentschrift :
07.09.94 Patentblatt 94/36

(51) Int. Cl.⁵ : **H04N 7/137**

(21) Anmeldenummer : 89108913.8

(22) Anmeldetag : 18.05.89

(54) **Bildcodierverfahren und Einrichtung.**

(30) Priorität : 13.06.88 DE 3820037

(43) Veröffentlichungstag der Anmeldung :
20.12.89 Patentblatt 89/51

(45) Bekanntmachung des Hinweises auf die
Patenterteilung :
07.09.94 Patentblatt 94/36

(84) Benannte Vertragsstaaten :
DE FR GB IT NL

(56) Entgegenhaltungen :
US-A- 4 670 851
US-A- 4 727 422
PROCEEDINGS OF THE ICASSP 86, Tokyo,
7.-11. April 1986, Band 2, Seiten 989-992,IEEE,
New York, US; R. FURNER et al.: "Motion
compensated vector quantization"

(56) Entgegenhaltungen :
IEEE TRANSACTIONS ON CONSUMER ELEC-
TRONICS, Band 34, Nr. 1, Februar 1988, Seiten
16-34, IEEE, New York, US; H. GAGGIONI et
al.: "Digital video transmission and coding for
the broadband ISDN"
"Signal Processing of HDTV", Proc. Int.
Workshop on Signal Proc. of HDTV, L'Aquila
(Italien), 29.02.-02.03.1988, Seiten 199-205

(73) Patentinhaber : **ANT Nachrichtentechnik
GmbH
Gerberstrasse 33
D-71522 Backnang (DE)**

(72) Erfinder : **Grotz, Karlheinz, Dipl.-Ing.
Wilhelmstrasse 25
D-7012 Fellbach (DE)**
Erfinder : **Mayer, Jörg, Dipl.-Ing.
Obere Waiblinger Strasse 120
D-7000 Stuttgart 50 (DE)**
Erfinder : **Süssmeier, Georg, Dipl.-Ing.
Hohenheimer Strasse 19
D-7150 Backnang (DE)**

EP 0 346 635 B1

**Beschreibung**

Die Erfindung betrifft ein Bildcodierverfahren sowie eine Bildcodiereinrichtung.

Für Bildinformationen, die über einen Übertragungskanal mit begrenzter Datenkapazität übertragen werden sollen, gibt es zahlreiche Verfahren zur Redundanz- und Irrelevanzverminderung. In Esprit'86 Results and Achievements, Commission of the European Commumities, Directorate General XIII, 1987, North-Holland, Seiten 413 bis 422, werden einige solcher Verfahren vorgeschlagen. Beim DPCM (Differential Pulse Code Modulation)-Verfahren wird anstelle aktueller Abtastwerte die Differenz zwischen dem aktuellen Wert und einem Prädiktionswert übertragen. Die Datenkompression wird durch Quantisierung erreicht. Bei der adaptiven DPCM wird anhand eines Bewegungskriteriums die Prädiktion und der Quantisierungsgrad gesteuert. Beim ABTC (Adaptive Block Truncation Coding)-Verfahren wird die Codierung je nach Bewegungsanteil von Bildbereichen in 3 Moden gesteuert. Das HPC (Hierarchical Predictive Coding)-Verfahren basiert auf der Kombination von Prädiktionscodierung und Interpolation. Bei der Transformationscodierung, z.B. der ADCT (Adaptive Cosine Transform)-Codierung werden die örtlichen Abtastwerte eines Bildblocks mittels einer mathematischen Vereinbarung transformiert zur Gewinnung von entkorrelierten Koeffizienten. Die Datenkompression wird durch Abschneiden von Koeffizienten und nichtlinearer Quantisierung erreicht. Bei der Vektorquantisierung wird das Bild in eine große Zahl kleiner Zellen unterteilt, z.B. 2x2 oder 4x4 Bildelemente. Jede Zelle von k Bildelementen wird dann als Vektor im k dimensionalen Raum aufgefaßt. Eine Anzahl von repräsentativen Vektoren wird für die Übertragung ausgewählt. Für die Codierung werden die aktuellen Bildvektoren durch die repräsentativen Vektoren in ihrer Nachbarschaft beschrieben.

Aus der DE-C-37 04 777 ist es bekannt, die Bewegungsvektoren für Teilbildbereiche zu ermitteln und diese zu codieren. Bei stark bewegten Bereichen werden bildpunktabhängige Informationen für diese Teilbildbereiche übertragen.

Aus "Signal Processing of HDTV", Proceedings of the International Workshop on Signal Processing of HDTV, Seiten 199 bis 205, L'Aquila 29 February to 02 March 1988, ist ein Bildcodierverfahren bekannt mit Ermittlung des Prädiktionsfehlers. Ist dieser kleiner als eine vorgegebene Schwelle, erfolgt eine Bewegungskompensation auf Bildblockbasis. Zur Begrenzung des Verarbeitungsaufwandes werden jedoch nicht alle Blöcke ausgewertet, sondern nur solche, die einen Schwellwert für eine Bewegungsaktivität unterschreiten. Diese Blöcke werden in Abhängigkeit ihrer Fehlerenergie geordnet. Nur die Blöcke mit großer Fehlerenergie werden transformationscodiert und übertragen. Andere Blöcke werden durch ihre Vorgänger ersetzt.

Aus "Motion Compensated Vector Quantization", Proceedings of the ICASSP, Seiten 989 bis 992, Tokyo, 07 to 11 April, 1986, ist eine bewegungskompensierte Vektorquantisierung bekannt, wo aufgrund der Fehlerenergie entschieden wird, ob ein Bewegungsvektor oder ein Differenzblock übertragen werden muß. Alternativ hierzu können auch nur Quantisierungsfehler eines Vektors übertragen werden.

Aus der US-A- 4,727,422 ist ein Bildcodierverfahren mit Bewegungsschätzung für Bildblöcke bekannt. Es werden entweder Bewegungsvektoren oder DPCM codierte Fehlersignale übertragen.

Aufgabe der Erfindung ist es, ein Bildcodierverfahren anzugeben, welches eine konstante lokale Rekonstruktionsqualität ermöglicht. Außerdem soll eine Bildcodiereinrichtung angegeben werden. Diese Aufgabe wird bezüglich des Verfahrens durch die Merkmale der Patentansprüche 1 oder 2 und bezüglich der Einrichtung durch die Merkmale der Patentansprüche 6 oder 7 gelöst. Die Patentansprüche 3 bis 5 zeigen Weiterbildungen des Verfahrens auf.

Die Erfindung ist für alle Verfahren der Bildcodierung geeignet, bei denen wegen einer geringen Übertragungskapazität, z.B. der Kanaldatenrate, nur ein Teil der gegenüber dem vorherigen Bild geänderten Information übertragen wird (Conditional-Replenishment-Verfahren).

Das erfindungsgemäße Verfahren ist anwendbar für alle blockorientierten Bildcodierverfahren, wie Transformationscodierung, Pyramidentransformation (ASST'87, 6. Aachener Symposium für Signaltheorie, Informatik Fachberichte 153, September 1987, Seiten 203 bis 206) und Vektorcodierung. Sie kann ebenfalls bei der DCPM-Codierung eingesetzt werden, wenn z.B. mehrere aufeinander folgende Bildpunkte zu einem Block zusammengefaßt werden. Die Auswahl der zu übertragenden Teilbildbereiche/Blöcke anhand des Gütekriteriums und gegebenenfalls der Anpassung der Codier-Bitrate an die beschränkte Kapazität des Übertragungskanals ermöglicht eine konstante lokale Rekonstruktionsqualität.

Der Datenstrom des datenreduzierten Bildsignals setzt sich im allgemeinen zusammen aus statistisch codierten Bilddaten, Synchroninformation und Steuerinformation, die eventuell auch statistisch codiert ist. Bei bisherigen Verfahren, z.B. DE 37 04 777 C1, wurde ein Teil des zur Verfügung stehenden Kanals von Synchron- und Steuerinformation belegt. Der Rest des Kanals wurde zur Übertragung von Bilddaten genutzt. Mittels eines Pufferspeichers wurden Datenspitzen abgefangen und ein gleichmäßiger Datenstrom erzeugt. Üblicherweise wird der Füllstand des Pufferspeichers zur Steuerung der Bilddatenrate herangezogen | CCIR Rec.-H120 |. Ein Pufferüberlauf wird durch Maßnahmen wie z.B. eine gröbere Quantisierung der Spektralwerte oder die Erhöhung von Entscheiderschwellen für das Conditional-Replenishment vermieden. Durch die Rückwärtssteuerung des Coders aus dem Pufferfüllstand entstehen folgende Nachteile, die beim Verfahren nicht mehr auftreten:

- Die lokale Rekonstruktionsqualität des Bildes ist nicht stabil, da sie von der globalen Regelgröße "Pufferfüllstand" und nicht direkt vom Bildinhalt abhängig ist. Je nach Pufferfüllstand können Teile des gleichen Bildes mit verschiedener Qualität codiert werden.
- Die Regelung greift erst nach der Codierung. Deshalb kann z.B. die Entscheidung, bestimmte Blöcke zu übertragen, nicht mehr rückgängig gemacht werden, wenn später im Bild Blöcke mit größeren Bildfehlern auftreten.
- Die Rekonstruktionsqualität des pufferfüllstandsgesteuerten Coders ist prinzipiell um so stabiler, je größer der Pufferspeicher ist. Für Anwendungen niederbitratiger Codecs im Gegensprechbetrieb (Video-Telefon) ist jedoch eine möglichst kleine laufzeit und damit ein möglichst kleiner Pufferspeicher anzustreben.

Mit dem Verfahren bzw. der Einrichtung gemäß der Erfindung läßt sich ein Bewegtbild-Codec mit 64 kbit/s für Videotelefon realisieren mit Stabilisierung der lokalen Rekonstruktionsqualität des Bildes. Die lokale Rekonstruktionsqualität des Bildes ist deshalb stabiler als bei üblichen Systemen, weil die Auswahl der zu übertragenden Teilbildbereiche/Blöcke allein vom Restfehler abhängig ist und nicht von der zeitlichen Reihenfolge der Verarbeitung. Durch die verwendete Vorwärtssteuerung kann der Pufferspeicher des Codecs kleiner als bei der üblichen Rückwärtssteuerung dimensioniert werden. Dementsprechend sinkt die Grundverzögerung des Codecs.

Bei der Verteilung der Datenrate wird das ganze Bild bzw. Differenzbild beurteilt. Die Pufferspeicher-Laufzeit läßt sich minimieren.

Anhand der Zeichnungen werden nun zwei Ausführungsbeispiele für Codiereinrichtungen vorgestellt, mit denen sich das Verfahren gemäß der Erfindung realisieren läßt.
Es zeigen

Fig. 1 ein Blockschaltbild einer Codiereinrichtung, bei der Teilbildbereiche übertragen werden und

Fig. 2 ein Blockschaltbild einer Codiereinrichtung, bei der Prädiktionsfehler übertragen werden.

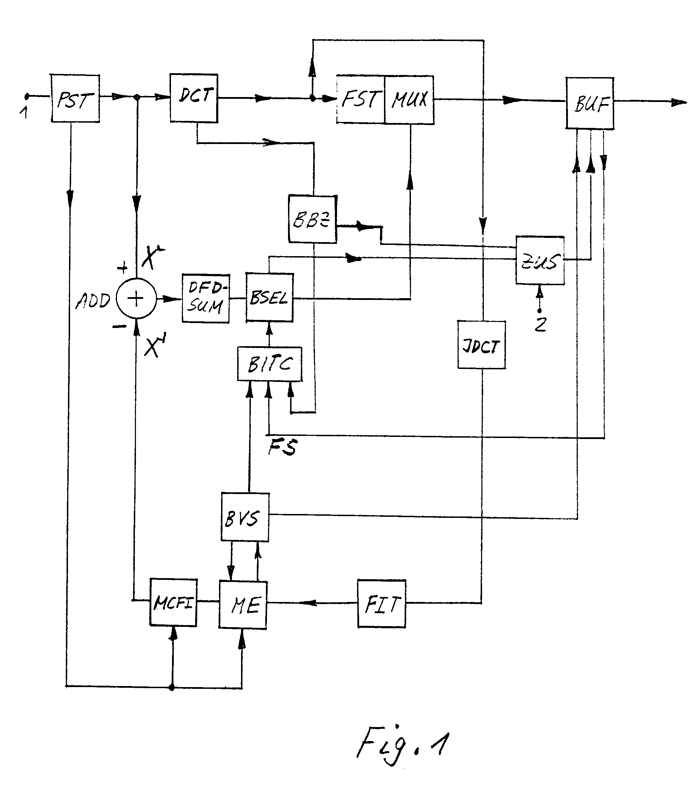

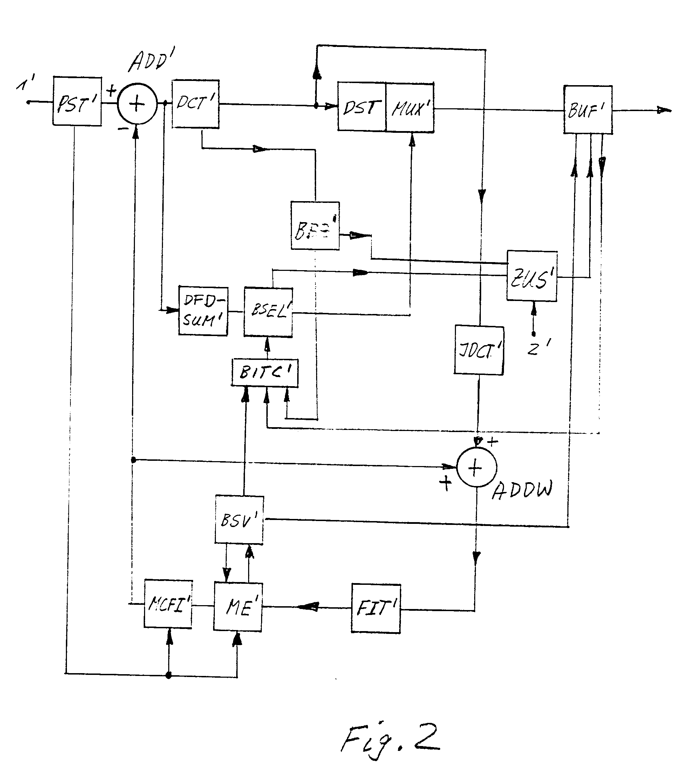

Beim Ausführungsbeispiel nach Fig. 1 wird eine PCM Bildsequenz, z.B. aus 2 Vollbildern, am Punkt 1 zugeführt. Diese Bildsequenz wird an einen Bildspeicher PST weitergeleitet. Die abgespeicherte Bildsequenz wird sowohl einem Bewegungsschätzer (motion estimator) ME als auch über einen Addierer ADD einer Einrichtung zum Ermitteln von Restfehlern DFD-SUM und einer wahrnehmungsadaptiven Transformationscodiereinrichtung DCT zugeleitet.

Als Bewegungsschätzer kann eine bekannte Einrichtung verwendet werden. Besonders geeignet ist ein hierarchisch strukturierter Bewegungsschätzer gemäß EP 236 519 A1. Als Transformationscodiereinrichtung kann die aus Esprit'86, Seiten 217 bis 218, s.o., bekannte Einrichtung verwendet werden oder auch Einrichtungen gemäß EP 13 069 A1, GB 21 41 847 A oder Philips techn. Rev. 38, 1978/79, No. 4/5, Seiten 119 bis 130. Die der DCT-Transformation unterzogene Bildsequenz wird in einem Speicher FST abgespeichert sowie in der Einrichtung JDCT einer zur DCT-Transformation inversen Transformation unterzogen. Über einen weiteren Bildspeicher FIT wird die rücktransformierte Bildsequenz dem Bewegungsschätzer ME zur Verfügung gestellt. Der Bewegungsschätzer ME liefert über einen Interpolator MCFI (motion compensating frame interpolator) Bildpunkte X' aus dem bewegungskompensierten Teilbildbereich des vorangegangenen Bildes. Für den Interpolator MCFI kann auf bekannte Realisierungen zurückgegriffen werden, beispielsweise auf den aus EP 236 519 A1 bekannten "Motion Compensating Interpolation Filter". Dieser berechnet jeden Bildpunkt als Funktion aus den Bewegungsvektoren, die der Bewegungsschätzer ME liefert, und der zeitlichen Position der Bildpunkte. Über einen Addierer ADD wird jeweils die Differenz zwischen aktuellen Bildpunkten X und Bildpunkten X' gebildet. Mittels der Einrichtung DFD-SUM werden diese Differenzen nach folgender Beziehung:

$$DFD = SUM \, |x - x'|$$

□ - Teilbildbereich/Block

zu einem Restfehler aufsummiert, welcher ein Gütekriterium für die bewegungskompensierte Rekonstruktion bezüglich der Teilbildbereiche darstellt. Diese Restfehler DFD werden nun in absteigender Fehlergröße durch eine Einrichtung BSEL geordnet (Tabelle 1). Die Einrichtung BSEL steuert einen Multiplexer MUX derart, daß nur solche im Speicher FST abgelegten DCT transformierten Teilbildbereiche an einen Pufferspeicher BUF weitergeleitet werden, die die größten Restfehler aufweisen. Die Bewegungsvektoren, die mit dem Displacementschätzer ME ermittelt werden und in einem Vektorspeicher BVS abgelegt sind, werden z.B. VWL (variable word length) codiert und ebenfalls dem Pufferspeicher BUF zugeführt. Synchron- und Steuerinformation wird über den Punkt 2 einer Aufbereitungsstufe ZUS zugeführt. Zusammen mit der Information über die geordneten Restfehler - BSEL - wird diese Zusatzinformation aufbereitet und codiert und zum Pufferspeicher BUF geleitet. Sie enthält beispielsweise die Blockadresse (letzte 2 Spalten in Tabelle 1) und die DCT-Bitzahl, d.h. die für die DCT-Codierung eines Teilbildbereichs/Blockes erforderliche Anzahl der Bits. Letztere Information wird von einem DCT-Blockbitzahl-Speicher BBZ geliefert, der an die Transformationscodiereinrichtung angeschlossen ist. Bei einer 64 kbit/s-Übertragung stehen nach der Codierung von Synchron- und Steuerinformation sowie der Bewegungsvektoren für die Ubertragung von DCT-Blöcken für ein bestimmtes Bild (vgl. Tabelle 1) z.B. noch 4723 bit zur Verfügung. Die Bitsumme aller Blöcke bis zum Block 122 beträgt einschließlich der Blockadressierung 4709 bit. Es können daher die ersten 122 DCT-Blöcke mit den größten Restfehlern DFD übertragen werden.

Zum Ansteuern der Einrichtung BSEL ist ein Bitzähler BITC vorgesehen, dem wiederum die Vektorbitzahl vom Vektorspeicher BVS, die DCT-Blockbitzahl und der Füllstand FS des Pufferspeichers BUF als Steuerkriterium zugeführt ist. Der Bitzähler BITC ermöglicht dadurch immer die maximal mögliche Ausnutzung des Übertragungskanals.

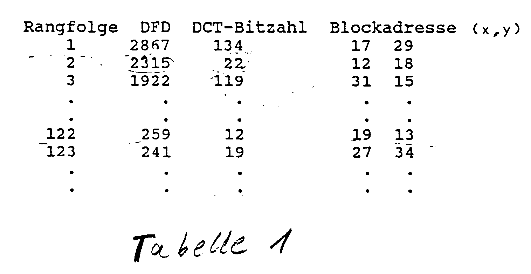

Anstelle der Übertragung der codierten Teilbildbereichs-/Blockinformation kann auch eine Übertragung der codierten Prädiktionsfehler vorgenommen werden. Eine Einrichtung hierzu zeigt Fig. 2, wobei die den in Fig. 1 entsprechenden Baugruppen mit gestrichenen Bezugszeichen dargestellt sind.

In Abweichung zu Fig. 1 ist ein Addierer ADD′ zwischen den entsprechenden eingangsseitigen Bildspeicher und die Transformationscodiereinrichtung DCT′ geschaltet. Dem Addierer ADD′ ist am Minuendeneingang das Ausgangssignal des der Fig. 1 entsprechenden Interpolators MCFI′ zugeführt. Die entsprechende Einrichtung DFD-SUM′ wertet das Ausgangssignal dieses Addierers ADD′ aus. Ein weiterer Addierer ADDW ist zwischen die entsprechende Einrichtung zur inversen DCT-Transformation JDCT′ und Speicher FIT′ geschaltet. An seinem Minuendeneingang wird diesem weiteren Addierer ADDW das Ausgangssignal des entsprechenden Interpolators MCFI′ zugeführt. Durch diese Modifikation bezüglich der Realisierung nach Fig. 1 wird dem Bewegungsschätzer ME′ nicht das rücktransformierte Bild zugeführt, sondern das rekonstruierte Bild, wobei zur Rekonstruktion das bewegungskompensierte Prädiktionsbild (Ausgangssignal des Interpolators MCFI′) und das nichttransformierte Fehlerbild herangezogen wird. Dadurch wird nicht das PCM-Bild DCT-codiert, sondern der bewegungskompensierte Prädiktionsfehler. Dieser bewegungskompensierte Prädiktionsfehler wird auch als Eingangssignal der Einrichtung DFD-SUM′ verwendet.

Als Gütekriterium kann anstelle des Restfehlers (Bildverschiebungsdifferenz)

$$DFD = SUM \: |x - x'|$$

auch der Ausdruck

$$DFD' = SUM \: (x - x')^2$$

verwendet werden oder ähnliche Beziehungen. Das Gütekriterium kann nicht nur zur Auswahl der zu übertragenden Blöcke herangezogen werden, sondern auch zur Steuerung der Codierdatenrate, z.B. durch eine Veränderung der Quantisierung.

Unter dem bisher verwendeten Begriff "Teilbildbereich" wurde ein matrixförmiger Bereich - Block - verstanden. Anstelle von solchen matrixförmigen Bereichen kann auch eine andere Struktur, z.B. in Form von Elementen eines Musters gelegt werden.

## Patentansprüche

1. Bildcodierverfahren für die Übertragung von Bildinformation über einen Kanal mit begrenzter Datenkapazität mit folgenden Schritten:
   - eine Bildsequenz wird einer Transformationscodierung (DCT) unterzogen,
   - die transformationscodierte Bildsequenz wird in einem Speicher (FST) abgelegt,
   - mittels eines Bewegungsschätzers (ME) werden aus der Bildsequenz selbst und aus der invers transformationscodierten Bildsequenz Bildpunkte aus bewegungskompensierten Teilbildbereichen des vorangegangenen Bildes erstellt,
   - es werden Differenzen zwischen den so ermittelten Bildpunkten und den entsprechenden Bildpunkten des aktuellen Bildes ermittelt,
   - diese Differenzen werden zu einem Restfehler aufsummiert, welcher in absteigender Fehlergröße geordnet wird,
   - die mit dem Bewegungsschätzer (ME) ermittelten Bewegungsvektoren werden in einem Vektorspeicher (BVS) abgespeichert,
   - die transformationscodierten Prädiktionsfehler werden, nach dem größten Restfehler geordnet aus dem Speicher (FST) ausgelesen und in einen Pufferspeicher (BUF) in Abhängigkeit eines Bitzählers (BITC) eingelesen, dem als Steuerkriterien die Bitzahl vom Vektorspeicher (BVS), die Bitzahl pro transformationscodiertem Prädiktionsfehler und der Füllstand des Pufferspeichers (BUF) zugeführt werden.

2. Bildcodierverfahren für die Übertragung von Bildinformation über einen Kanal mit begrenzter Datenkapazität mit folgenden Schritten:
   - mittels eines Bewegungsschätzers (ME′) werden aus einer Bildsequenz aufgrund eines bewegungskompensierten Prädiktionsbildes und eines Fehlerbildes bewegungskompensierte Prädiktionsfehler gebildet,
   - diese bewegungskompensierten Prädiktionsfehler werden einer Transformationscodierung (DCT′) unterzogen,
   - die bewegungskompensierten und transformationscodierten Prädiktionsfehler werden in einem Speicher (DST) abgelegt,
   - die bewegungskompensierten Prädiktionsfehler werden außerdem noch zu einem Restfehler aufsummiert, welcher in absteigender Fehlergröße geordnet wird,
- die mit dem Bewegungsschätzer (ME') außerdem ermittelten Bewegungsvektoren werden in einem Vektorspeicher (BVS') abgespeichert,
- die transformationscodierten Bildbereiche werden, nach dem größten Restfehler geordnet, aus dem Speicher (DST) ausgelesen und in einen Pufferspeicher (BUF') in Abhängigkeit eines Bitzählers (BITC') eingelesen, dem als Steuerkriterien die Bitzahl vom Vektorspeicher (BVS'), die Bitzahl pro transformationscodiertem Teilbildbereich und der Füllstand des Pufferspeichers (BUF') zugeführt werden.

3. Verfahren nach Anspruch 1 oder 2, gekennzeichnet durch Auswählen der Bildsequenzverschiebungsdifferenz (displaced frame difference - DFD)

$$DFD = SUM \, |x - x'|$$

als Gütekriterium für den Restfehler, wobei mit
SUM     die Summe über alle Teilbildbereiche-/Blockelemente,
x     der Bildpunkt aus einem PCM-Block des aktuellen Bildes,
x'     der entsprechende Bildpunkt aus dem bewegungskompensierten Teilbildbereich / Block des letzten Bildes bezeichnet ist.

4. Verfahren nach Anspruch 1 oder 2, gekennzeichnet durch Auswählen des Ausdrucks

$$DFD' = SUM \, (x - x')^2$$

als Gütekriterium für den Restfehler, wobei mit
SUM     die Summe über alle Teilbildbereiche-/Blockelemente,

x     der Bildpunkt aus einem PCM-Block des aktuellen Bildes,

x'     der entsprechende Bildpunkt aus dem bewegungskompensierten Teilbildbereich / Block des letzten Bildes bezeichnet ist.

5. Verfahren nach einem der Ansprüche 1 bis 4, gekennzeichnet durch Steuern der Codierdatenrate in Abhängigkeit des Gütekriteriums.

6. Bildcodiereinrichtung, insbesondere zum Durchführen des Verfahrens nach einem der Ansprüche 1, 3, 4 oder 5 mit folgenden Baugruppen:
- einer bewegungsadaptiven Transformationscodiereinrichtung (DCT) für Teilbildbereiche mit nachgeschaltetem Speicher (FST),

- einer Einrichtung (ME, BSV) zum Ermitteln von Bewegungsvektoren für Teilbildbereiche,
- einer Einrichtung zum Ermitteln der Restfehler (ADD, DFD-SUM) der mit den Bewegungsvektoren bewegungskompensierten Teilbildbereiche / Blöcke,
- einer Einrichtung zum Auswählen der codierten zu übertragenden Teilbildbereiche / Blöcke in Abhängigkeit der größten Restfehler (BSEL, MUX),
- einem Pufferspeicher (BUF) zum Zusammenfügen der codierten Bewegungsvektoren, der ausgewählten codierten Teilbildbereiche / Blöcke und gegebenenfalls Steuer- und/oder Synchroninformation zu einem Übertragungssignal,
- einem Bitzähler (BITC) zur Steuerung vorgenannter Einrichtung zum Auswählen (BSEL), wobei dieser Bitzähler (BITC) mit der Einrichtung zum Ermitteln der Bewegungsvektoren (BSV), dem Pufferspeicher (BUF) und einem Speicher für die Teilbildbereichs-/Blockbitzahl (BBZ) verbunden ist.

7. Bildcodiereinrichtung, insbesondere zum Durchführen des Verfahrens nach einem der Ansprüche 2, 3, 4 oder 5 mit folgenden Baugruppen:
- einer Transformationscodiereinrichtung (DCT') für bewegungskompensierte Prädiktionsfehler mit nachgeschaltetem Speicher (DST),
- einer Einrichtung (ME', BSV') zum Ermitteln von Bewegungsvektoren für Teilbildbereiche,
- einer Einrichtung zum Ermitteln der Restfehler (ADD', DFD-SUM') für bewegungskompensierte Prädiktionsfehler,
- einer Einrichtung zum Auswählen der codierten zu übertragenden bewegungskompensierten Prädiktionsfehler in Abhängigkeit der größten Restfehler (BSEL', MUX'),
- einem Pufferspeicher (BUF') zum Zusammenfügen der codierten Bewegungsvektoren, der ausgewählten codierten bewegungskompensierten Prädiktionsfehler und gegebenenfalls Steuer- und/oder Synchroninformation zu einem Übertragungssignal,
- einem Bitzähler (BITC') zur Steuerung vorgenannter Einrichtung zum Auswählen (BSEL'), wobei dieser Bitzähler (BITC') mit der Einrichtung zum Ermitteln der Bewegungsvektoren (BSV'), dem Pufferspeicher (BUF') und einem Speicher für die Teilbildbereichs-/Blockbitzahl (BBZ) verbunden ist.

## Claims

1. Image-coding method for the transmission of image information by way of a channel of limited data capacity with the following steps:
   - an image sequence is subjected to a transformation coding (DCT),
   - the transformation-coded image sequence is filed in a storage device (FST),
   - image dots from movement-compensated partial image regions of the preceding image are set up from the image sequence itself and from the inversely transformation-coded image sequence by means of a movement estimator (ME),
   - differences between the thus determined image dots and the corresponding image dots of the actual image are ascertained,
   - these differences are added up into a residual error which is ordered in decreasing error magnitude,
   - the movement vectors determined by the movement estimator (ME) are filed in a vector storage device (BVS) and
   - the transformation-coded prediction errors read out of the storage device (FST) ordered according to the greatest residual error and written into a buffer storage device (BUF) in dependence on a bit counter (BITC), to which the bit number from the vector storage device (BVS), the bit number per transformation-coded prediction error and the filling state of the buffer storage device (BUF) are fed as control criteria.

2. Image-coding method for the transmission of image information by way of a channel of limited data capacity with the following steps:
   - movement-compensated prediction errors are formed from an image sequence on the basis of a movement compensated prediction image and an error image by means of a movement estimator (ME′),
   - these movement-compensated prediction errors are subjected to a transformation coding (DCT′),
   - the movement-compensated and transformation-coded prediction errors are filed in a storage device (DST),
   - the movement-compensated prediction errors are beyond that still added up into a residual error which is ordered in decreasing error magnitude,
   - the movement vectors determined by the movement estimator (ME′) are filed in a vector storage device (BVS′) and
   - the transformation-coded image regions are read out of the storage device (DST) ordered according to the greatest residual error and written into a buffer storage device (BUF′) in dependence on a bit counter (BITC′) to which the bit number from the vector storage device (BVS′), the bit number per transformation-coded partial image region and the filling state of the buffer storage device (BUF′) are fed as control criteria.

3. Method according to claim 1 or 2, characterised by selection of the image sequence shift difference (displaced frame difference - DFD)
$$DFD = SUM \mid x - x′ \mid$$
as quality criterion for the residual error wherein
   SUM    denotes the sum of all partial image regions or block elements,
   x      the image dot from a pulse-code-modulated block of the actual image and
   x′     the corresponding image dot from the movement-compensated partial image region or block of the last image.

4. Method according to claim 1 or 2, characterised by selection of the expression
$$DFD′ = SUM (x - x′)^2$$
as quality criterion for the residual error wherein
   SUM    denotes the sum of all partial image regions or block elements,
   x      the image dot from a pulse-code-modulated block of the actual image and
   x′     the corresponding image dot from the movement-compensated partial image region or block of the last image.

5. Method according to one of the claims 1 to 4, characterised by control of the coding data rate in dependence on the quality criterion.

6. Image-coding equipment, in particular for the performance of the method according to one of the claims 1, 3, 4 and 5, with the following assemblies:
   - a movement-adaptive transformation-coding equipment (DCT) for partial image regions with a storage device (FST) connected therebehind,
   - an equipment (ME, BSV) for ascertaining movement vectors for partial image regions,
   - an equipment for ascertaining the residual errors (ADD, DFD-SUM) of the partial image regions or blocks movement-compensated by the movement vectors,
   - an equipment for the selection of the coded partial image region or blocks, which are to be transmitted, in dependence on the greatest residual errors (BSEL, MUX),
- a buffer storage device (BUF) for the assembling of the coded movement vectors, the selected partial image regions or blocks and, in a given case, control information and/or synchronising information into a transmission signal and
- a bit counter (BITC) for the control of the aforementioned equipment for selection (BSEL), wherein this bit counter (BITC) is connected with the equipment for ascertaining the movement vectors (BSV), the buffer storage device (BUF) and a storage device (BBZ) for the bit number of the partial image region or block.

7. Image-coding equipment, in particular for the performance of the method according to one of the claims 2, 3, 4 and 5, with the following assemblies:
- a transformation-coding equipment (DCT′) for movement-compensated prediction errors with a storage device (DST) connected therebehind,
- an equipment (ME′, BSV′) for the ascertaining of movement vectors for partial image regions,
- an equipment for ascertaining the residual errors (ADD′, DFD-SUM′) for movement-compensated prediction errors,
- an equipment for the selection of the coded movement-compensated prediction errors, which are to be transmitted, in dependence on the greatest residual errors (BSEL′, MUX′),
- a buffer storage device (BUF′) for the assembling of the coded movement vectors, the selected coded movement-compensated prediction errors and, in a given case, control information and/or synchronising information into a transmission signal and
- a bit counter (BITC′) for the control of the aforementioned equipment for selection (BSEL′), wherein this bit counter (BITC′) is connected with the equipment for ascertaining the movement vectors (BSV′), the buffer storage device (BUF′) and a storage device (BBZ) for the bit number of the partial image region or block.

**Revendications**

1. Procéde de codage d'images pour la transmission d'information vidéo par un canal ayant une capacité de données limitée, comprenant les étapes suivantes:

- soumission d'une séquence d'images à un codage par transformation (DCT),
- stockage de la séquence d'images codée par transformation dans une mémoire (FST),
- formation, au moyen d'un estimateur de mouvement (ME), à partir de la séquence d'images elle-même et à partir de la séquence d'images soumise à un codage par transformation inverse, de points d'image de zones d'image partielle compensées en mouvement de l'image précédente,
- établissement de différences entre les points d'image ainsi formés et les points d'image correspondants de l'image actuelle,
- totalisation de ces différences en une erreur résiduelle, laquelle est ordonnée suivant une grandeur d'erreur décroissante,
- stockage des vecteurs de mouvement déterminés par l'estimateur de mouvement (ME) dans une mémoire de vecteurs (BVS) et
- extraction de la mémoire (FST), dans l'ordre de la plus grande erreur résiduelle, des erreurs prévisionnelles codées par transformation et chargement de ces erreurs dans une mémoire tampon (BUF) en fonction d'un compteur binaire (BITC) auquel sont appliqués, en tant que critères de commande, le nombre de bits de la mémoire de vecteurs (BVS), le nombre de bits par erreur prévisionnelle codée par transformation et le niveau de remplissage de la mémoire tampon (BUF).

2. Procédé de codage d'images pour la transmission d'information vidéo par un canal ayant une capacité de données limitée, comprenant les étapes suivantes:
- formation, au moyen d'un estimateur de mouvement (ME′), d'erreurs prévisionnelles compensées en mouvement à partir d'une séquence d'images, sur la base d'une image prévisionnelle compensée en mouvement et d'une image erronée,
- soumission de ces erreurs prévisionnelles compensées en mouvement à un codage par transformation (DCT′),
- stockage des erreurs prévisionnelles compensées en mouvement et codées par transformation dans une mémoire (DST),
- totalisation, en plus, des erreurs prévisionnelles compensées en mouvement en une erreur résiduelle, laquelle est ordonnée suivant une grandeur d'erreur décroissante,
- stockage des vecteurs de mouvement, déterminés également par l'estimateur de mouvement (ME′), dans une mémoire de vecteurs (BVS′) et

- extraction de la mémoire (DST), dans l'ordre de la plus grande erreur résiduelle, des zones d'image codées par transformation et chargement de ces zones d'image dans une mémoire tampon (BUF′) en fonction d'un compteur binaire (BITC) auquel sont appliqués, en tant que critères de commande, le nombre de bits de la mémoire de vecteurs (BVS′), le nombre de bits par erreur prévisionnelle codée par transformation et le niveau de remplissage de la mémoire tampon (BUF′).

3. Procédé selon la revendication 1 ou 2, caractérisé par la sélection de la différence de décalage de la séquence d'images (displaced frame difference - DFD)

$$DFD = SUM \mid x - x′ \mid$$

en tant que critère qualitatif pour l'erreur résiduelle, où

SUM désigne la somme de tous les éléments de zones d'image partielle/blocs,

x désigne le point d'image d'un bloc MIC de l'image actuelle et

x′ désigne le point d'image correspondant de la zone d'image partielle/bloc compensé en mouvement de la dernière image.

4. Procédé selon la revendication 1 ou 2, caractérisé par le choix de l'expression

$$DFD′ = SUM (x - x′)^2$$

en tant que critère qualitatif pour l'erreur résiduelle, où

SUM désigne la somme de tous les éléments de zones d'image partielle/blocs,

x désigne le point d'image d'un bloc MIC de l'image actuelle et

x′ désigne le point d'image correspondant de la zone d'image partielle/bloc compensé en mouvement de la dernière image.

5. Procédé selon une des revendications 1 à 4, caractérisé par le réglage du débit binaire de codage en fonction du critère qualitatif.

6. Dispositif de codage d'images, en particulier pour la mise en oeuvre du procédé selon une des revendications 1, 3, 4 ou 5, comprenant les ensembles suivants:

- un dispositif de codage par transformation (DCT) adaptatif selon le mouvement pour zones d'image partielle, suivi d'une mémoire (FST),
- un dispositif (ME, BSV) pour déterminer des vecteurs de mouvement pour des zones d'image partielle,
- un dispositif pour déterminer les erreurs résiduelles (ADD, DFD-SUM) des zones d'image partielle/blocs compensés en mouvement par les vecteurs de mouvement,

- un dispositif pour sélectionner les zones d'image partielle/blocs codés à transmettre, en fonction de la plus grande erreur résiduelle (BSEL, MUX),
- une mémoire tampon (BUF) pour rassembler les vecteurs de mouvement codés, les zones d'image partielle/blocs codés sélectionnés et, éventuellement, une information de commande et/ou une information de synchronisation, en un signal de transmission et
- un compteur binaire (BITC) pour commander le dispositif de sélection (BSEL) précité, ce compteur binaire (RTTC) étant relié au dispositif pour déterminer les vecteurs de mouvement (BSV), à la mémoire tampon (BUF) et à une mémoire pour le nombre de bits des zones d'image partielle/blocs (BBZ).

7. Dispositif de codage d'images, en particulier pour la mise en oeuvre du procédé selon une des revendications 2, 3, 4 ou 5, comprenant les ensembles suivants:

- un dispositif de codage par transformation (DCT′) pour erreurs prévisionnelles compensées en mouvement, suivi d'une mémoire (DST),
- un dispositif (ME′, BSV′) pour déterminer des vecteurs de mouvement pour des zones d'image partielle,
- un dispositif pour déterminer les erreurs résiduelles (ADD′, DFD-SUM′) pour erreurs prévisionnelles compensées en mouvement,
- un dispositif pour sélectionner les erreurs prévisionnelles codées et compensées en mouvement à transmettre, en fonction de la plus grande erreur résiduelle (BSEL′, MUX′),
- une mémoire tampon (BUF′) pour rassembler les vecteurs de mouvement codés, les zones d'image partielle/ blocs codés sélectionnés et, éventuellement, une information de commande et/ou une information de synchronisation, en un signal de transmission et
- un compteur binaire (BITC′) pour commander le dispositif de sélection (BSEL′) précité, ce compteur binaire (BITC′) étant relié au dispositif pour déterminer les vecteurs de mouvement (BSV′), à la mémoire tampon (BUF′) et à une mémoire pour le nombre de bits des zones d'image partielle/blocs (BBZ).

Fig. 1

Fig. 2

| Rangfolge | DFD | DCT-Bitzahl | Blockadresse (x,y) | |
|---|---|---|---|---|
| 1 | 2867 | 134 | 17 | 29 |
| 2 | 2315 | 22 | 12 | 18 |
| 3 | 1922 | 119 | 31 | 15 |
| . | . | . | . | . |
| . | . | . | . | . |
| 122 | 259 | 12 | 19 | 13 |
| 123 | 241 | 19 | 27 | 34 |
| . | . | . | . | . |
| . | . | . | . | . |

Tabelle 1